# FASCICULE DE BREVET EUROPEEN

(11) **EP 3 600 736 B1**
(45) Date de publication et mention de la délivrance du brevet: **19.10.2022**
(21) Numéro de dépôt: 18715780.5
(22) Date de dépôt: 22.03.2018
(51) Int. Cl.: B23B 31/12

(54) **MANDRIN DE SERRAGE A COULISSEAUX INCLINES**
SPANNFUTTER MIT GENEIGTEN SCHIEBERN
CLAMPING CHUCK WITH INCLINED SLIDES

(30) Priorité: 28.03.2017 FR 1770307
(43) Date de publication de la demande: 05.02.2020
(73) Titulaire: Technic.com, 75019 Paris (FR)
(72) Inventeur: GAILLARD, Jean-Christophe, 75002 Paris (FR)
(74) Mandataire: Demulsant, Xavier
(86) Numéro de dépôt international: PCT/FR2018/050692
(87) Numéro de publication internationale: WO 2018/178542

(56) Documents cités:
- US-A- 3 707 292
- US-A- 3 833 229
- US-A1- 2005 067 797
- US-A1- 2014 001 712
- US-B1- 6 394 467

## Description

La présente invention concerne un mandrin de serrage de précision à coulisseaux inclinés pour machines-outils, notamment pour des centres d'usinage ou de fraisage.

On connaît tout d'abord des mandrins, dits de type classique, qui sont préférentiellement utilisés sur des machines-outils telles que par exemple des tours, dans lesquels les mors se déplacent de façon radiale. On sait que, si de tels mandrins présentent l'avantage d'être en mesure d'assurer le maintien de pièces de diamètres très différents, ils présentent cependant l'inconvénient de ne pas assurer un maintien précis et répétitif en positionnement de celles-ci, dans la mesure où, en fin de serrage, les pièces maintenues ont tendance à s'éloigner de la face frontale du mandrin.

Pour éviter cet inconvénient, on a proposé des mandrins de précision, dits à coulisseaux inclinés, dans lesquels, en fin de serrage, les pièces se trouvent appliquées contre la face frontale du corps du mandrin, ce qui a pour effet de les positionner axialement de façon précise et répétitive. Par ailleurs, en raison de la constitution de ce type de mandrin, on améliore de façon importante leur étanchéité à l'égard de la poussière, des copeaux, et du liquide d'usinage.

Ces mandrins à coulisseaux inclinés peuvent être classés en deux catégories principales, à savoir les mandrins qui effectuent un serrage de la pièce à maintenir par l'extérieur et ceux qui effectuent un serrage de cette dernière par l'intérieur.

Dans l'un et l'autre cas, on sait que, lors de la conception des mandrins à coulisseaux inclinés, on est confronté à des contraintes majeures.

Une première contrainte est de disposer, au niveau des moyens d'entraînement entre le piston de commande qui assure le déplacement des coulisseaux et ces derniers, d'un volume suffisant pour que ces moyens d'entraînement permettent à la fois une mise en place des coulisseaux par la face antérieure du mandrin et leur verrouillage avec le piston. Or, si dans les mandrins à serrage par l'intérieur un tel volume est relativement aisé à trouver en raison du fait que les axes des coulisseaux divergent lorsque l'on va de la face antérieure vers la face postérieure du mandrin, l'expérience montre que ce volume est beaucoup plus difficile à trouver dans les mandrins à serrage par l'extérieur, dans lesquels les axes des coulisseaux convergent vers le fond du mandrin. Dans ce dernier cas, la situation est encore plus difficile lorsque le mandrin est de faible diamètre.

Une seconde contrainte est de réaliser un verrouillage entre le piston de commande et chacun des coulisseaux qui présente des surfaces de contact suffisantes pour permettre au mandrin d'assurer sans dommage un serrage efficace des pièces à maintenir.

Une troisième contrainte est de permettre aux coulisseaux, une fois qu'ils sont en prise avec leur moyen d'entraînement, d'être en mesure d'effectuer une rotation de faible amplitude autour de leur axe longitudinal, de façon à permettre une adaptation des mors de serrage dont ils sont équipés avec la surface de la pièce à maintenir, cette adaptation étant désignée ci-après par « palonnage ».

On connaît des mandrins à coulisseaux inclinés dans lesquels le serrage des pièces à maintenir s'effectue par le centre, et dont les coulisseaux se mettent en place à partir de la face frontale des mandrins, la base de ces coulisseaux venant se verrouiller sur des moyens d'entraînement constitués d'un piston de commande monté mobile suivant l'axe des mandrins.

On connaît ainsi par le brevet US 3 707 292 un tel mandrin, dont la base du piston de commande est de section droite triangulaire et chacune des faces ainsi formées est pourvue d'un téton qui, lors du verrouillage, vient s'engager dans une rainure d'un coulisseau de façon à se solidariser de celui-ci à la façon d'une fixation de type à baïonnette. On comprend qu'une telle solution présente l'inconvénient de ne pouvoir être applicable qu'à des mandrins ne nécessitant qu'une force de serrage limitée, en raison de la faible résistance au cisaillement présentée par les tétons. Par ailleurs, cette solution exclut la mise en œuvre de moyens de palonnage.

On connaît également par la demande US 2005/0067797 un mandrin à coulisseaux inclinés de même type, dans lequel les coulisseaux sont disposés, non pas dans le corps de mandrin mais dans le piston de commande, si bien que, lorsque ce dernier se déplace suivant l'axe du mandrin lors du serrage/desserrage, les coulisseaux ne se déplacent pas exclusivement suivant leur axe longitudinal, mais sont guidés radialement uniquement par leur pied, ce qui a pour effet de les soumettre à un arc-boutement préjudiciable à l'efficacité du serrage.

On connaît enfin par le brevet US 3 833 229 un mandrin à coulisseaux inclinés du type selon le préambule de la revendication 1, dans lequel le pied des coulisseaux est taillé de façon à former un méplat qui, lors du verrouillage, est apte à pénétrer dans une fourche du piston en forme de rainure radiale, si bien qu'après un quart de tour autour de son axe longitudinal il se trouve solidarisé de ce piston. Un tel mode de mise en oeuvre, en raison de l'encombrement nécessaire à la réalisation des fourches sur le piston de commande, ne peut être réalisé que sur des mandrins d'un diamètre important, surtout dans le cas des mandrins à serrage par l'extérieur où les coulisseaux convergent vers le fond du mandrin, ce qui laisse fort peu de place pour assurer leur solidarisation avec le piston de commande.

La présente invention a pour but de remédier à ces inconvénients, en proposant un mandrin du type à coulisseaux inclinés dans lequel les moyens de mise en prise de ces coulisseaux avec leur organe de commande soient à la fois d'une réalisation facile, en mesure de transmettre des efforts de serrage importants, permettent le palonnage tout en occupant un volume particulièrement réduit par rapport aux dispositifs de l'état antérieur de la technique, permettant ainsi de réaliser des mandrins de plus petit diamètre, notamment dans le cas des mandrins à serrage par l'extérieur.

La présente invention a ainsi pour objet un mandrin de serrage selon la revendication 1.

L'embrèvement sera préférentiellement formé d'un creux s'étendant de la seconde extrémité du coulisseau jusqu'à déboucher dans la rainure.

Suivant l'invention, le fond de la rainure pourra comporter trois zones, à savoir une zone dont le profil sera complémentaire de celui de la périphérie de la zone d'entraînement du plateau, une zone en arc de cercle dont le rayon sera égal à la distance séparant son axe de la périphérie de la zone d'entraînement du plateau, et une troisième zone.

Cette dernière pourra être rectiligne telle que, après la susdite rotation du coulisseau, elle soit voisine de la périphérie de la zone d'entraînement du plateau.

La troisième zone pourra également être telle que, après la susdite rotation du coulisseau, elle ait une forme complémentaire de celle de la périphérie de la zone d'entraînement du plateau.

Le mandrin suivant l'invention pourra comprendre des moyens de contrôle de l'amplitude de palonnage d'un mors solidaire du coulisseau.

Ces moyens de contrôle pourront comprendre une gorge longitudinale réalisée sur le coulisseau dans laquelle viendra prendre place un téton lié au corps dudit mandrin dont le diamètre sera inférieur à la largeur de la gorge longitudinale.

Le mandrin suivant l'invention pourra comprendre des moyens de sollicitation en rotation du coulisseau autour de son axe longitudinal, pour le ramener vers une position d'équilibre. Ces moyens pourront comprendre un élément de rappel qui sera disposé dans un logement du corps de mandrin comprenant une embase sollicitée vers le fond de ce logement par des moyens élastiques, cette embase se prolongeant par une tête venant se loger dans la gorge.

Dans une variante de mise en oeuvre, le piston sera pourvu de moyens d'indexation aptes à le positionner par rapport au logement du coulisseau de façon telle que la zone d'entraînement se trouve disposée face à celui-ci.

On décrira ci-après, à titre d'exemple non limitatif, des formes d'exécution de la présente invention, en référence au dessin annexé sur lequel :
- la figure 1 est une vue en perspective d'un mandrin à coulisseaux inclinés suivant l'invention ;
- la figure 2a est une vue en coupe axiale et diamétrale du mandrin représenté sur la figure 1, en position de mise en place des coulisseaux ;
- la figure 2b est une vue en coupe partielle du mandrin représenté sur la figure 2a suivant la ligne de coupe brisée IIb-IIb de celle-ci ;
- la figure 2c est une vue en coupe axiale et diamétrale du mandrin représenté sur la figure 1, en position de serrage de celui-ci ;
- la figure 2d est une vue en coupe partielle du mandrin représenté sur la figure 2c suivant la ligne de coupe brisée IId-IId de celle-ci ;
- la figure 2e est une vue en coupe axiale et diamétrale du corps 2 du mandrin et de sa plaque de fond ;
- la figure 3a est une vue en perspective d'un coulisseau mis en œuvre dans le mandrin suivant l'invention ;
- la figure 3b est une vue en perspective du coulisseau représenté sur la figure 3a après une rotation de celui-ci d'environ 90° autour de son axe longitudinal ;
- la figure 4a est une vue en coupe axiale et diamétrale d'un piston de commande des coulisseaux mis en oeuvre dans le mandrin suivant l'invention ;
- la figure 4b est une vue en perspective du piston de commande représenté sur la figure 4a ;
- la figure 5 est une vue partielle agrandie de la figure 2b ;
- la figure 6a est une vue en coupe partielle d'une variante de réalisation non conforme à l'invention du plateau du piston de commande et de l'embrèvement du coulisseau associé à celui-ci en position de mise en place de ce dernier ;
- la figure 6b est une vue en coupe partielle d'une variante de réalisation du plateau du piston de commande et de l'embrèvement du coulisseau associé à celui-ci en position de serrage du mandrin ;

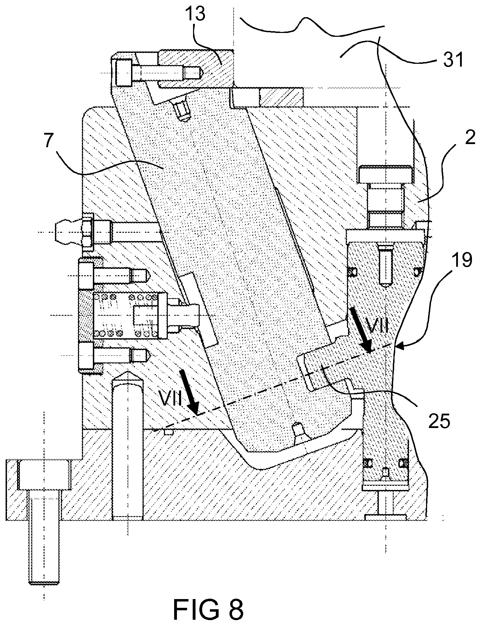

- la figure 7 est une vue en coupe diamétrale d'un coulisseau suivant la ligne VII-VII de la figure 8 ;
- la figure 8 est une vue en coupe partielle axiale et diamétrale d'une variante de mise en oeuvre d'un mandrin suivant l'invention ;
- la figure 9a est une vue en perspective montrant l'introduction des coulisseaux dans le corps de mandrin ;
- la figure 9b est une vue en perspective montrant les coulisseaux et leur piston de commande lors de leur mise en place dans le corps de mandrin, ce dernier n'étant pas représenté ;
- la figure 9c est une vue en perspective montrant les trois coulisseaux et leur piston de commande lors de leur première phase de mise en place dans le corps de mandrin, ce dernier n'étant pas représenté et les coulisseaux étant prêts à être verrouillés sur le piston ;
- la figure 9d est une vue en perspective montrant les trois coulisseaux et leur piston de commande lors de la seconde phase de leur mise en place dans le corps de mandrin, ce dernier n'étant pas représenté et les coulisseaux étant verrouillés sur le piston ;
- les figures 10a et 10b sont respectivement des vues schématiques d'une pièce serrée par des mors sans « palonnage » et avec « palonnage » ;
- la figure 11 est une vue schématique représentant un coulisseau et un piston d'entraînement associé suivant l'état antérieur de la technique ;
- la figure 12 est une coupe schématique diamétrale du corps de mandrin montrant un premier dispositif destiné à contrôler l'amplitude du « palonnage » des coulisseaux ;
- les figures 13a et 13b sont des coupes schématiques diamétrales du corps de mandrin montrant un dispositif destiné à ramener angulairement le coulisseau en position initiale après « palonnage » des coulisseaux ;
- la figure 14 est un schéma montrant en coupe axiale et diamétrale partielle une variante portant sur le sens d'inclinaison des coulisseaux ;
- la figure 15 est un schéma montrant en coupe axiale et diamétrale une variante d'un mandrin à deux coulisseaux.

On a représenté sur les figures un mandrin de précision de type dit à coulisseaux inclinés suivant l'invention.

Ce mandrin cylindrique 1 d'axe longitudinal xx', est formé d'un corps de mandrin cylindrique 2 qui comporte une face frontale 3 dite face avant et une face opposée 5 dite face arrière, cette dernière recevant une plaque de fond 5a. Ce mandrin qui, dans le présent exemple, est destiné à être monté sur un centre d'usinage, pourrait bien entendu équiper également une machine-outil telle qu'un tour, une rectifieuse, une tailleuse d'engrenages etc...

Il comporte trois coulisseaux cylindriques 7 qui sont montés à coulissement dans trois logements 9 qui sont creusés dans le corps 2 et qui débouchent dans la face avant 3 par trois orifices 9a qui se répartissent régulièrement suivant la périphérie de celle-ci, c'est-à-dire que leurs centres forment entre eux des angles au centre égaux de 120°. Une première extrémité de chaque coulisseau, dite extrémité active, dépasse de la face avant 3 et reçoit un mors de serrage 13.

Ainsi que représenté sur la figure 2e, l'axe longitudinal uu' de chacun des logements 9 des coulisseaux 7 est incliné par rapport à l'axe xx' du corps 2 du mandrin d'un angle β d'environ 20° dans le présent exemple, cet axe uu' se rapprochant de l'axe xx' du mandrin lorsque l'on va de la face avant 3 vers la face arrière 5.

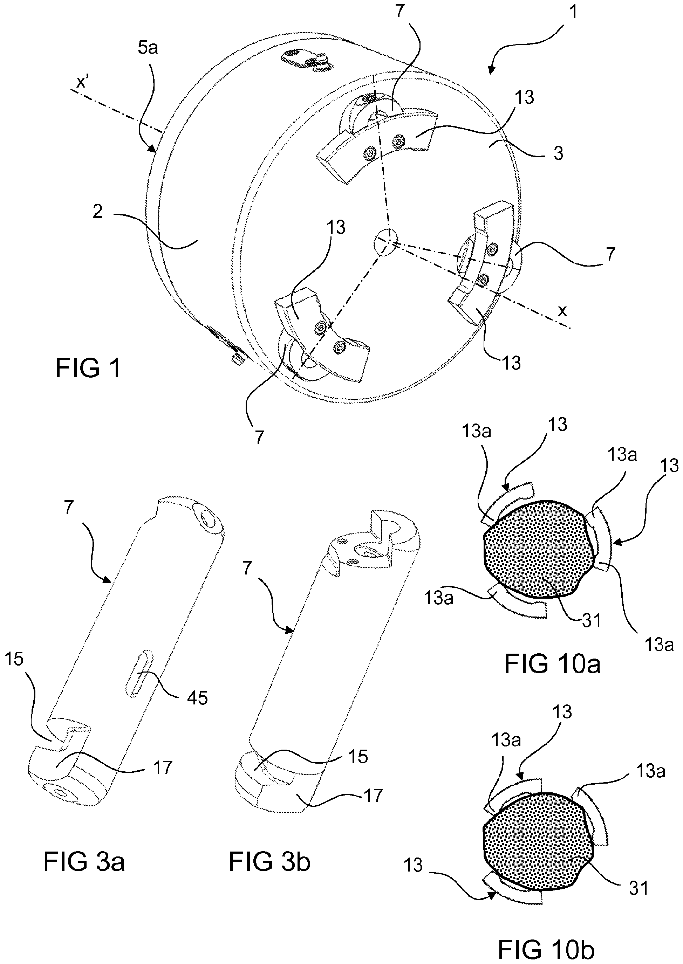

Ainsi que représenté sur les figures 3a et 3b, la seconde extrémité des coulisseaux 7, dite ci-après pied, est creusée d'une rainure semi-circulaire 15 dont les deux bords latéraux sont parallèles et situés dans des plans perpendiculaires à l'axe uu', cette rainure débouchant à la partie supérieure d'un embrèvement 17 dont la forme et les dimensions seront précisées ci-après.

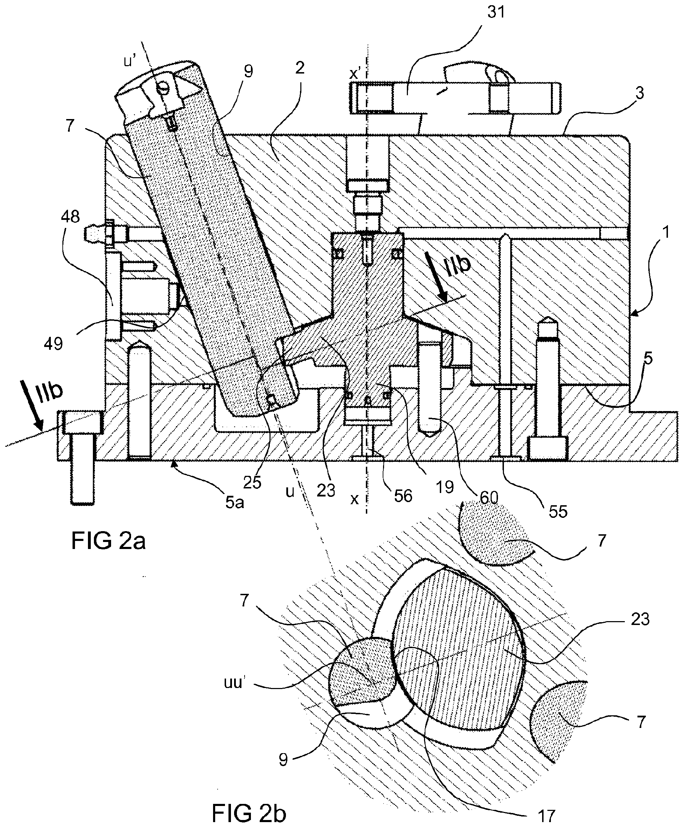

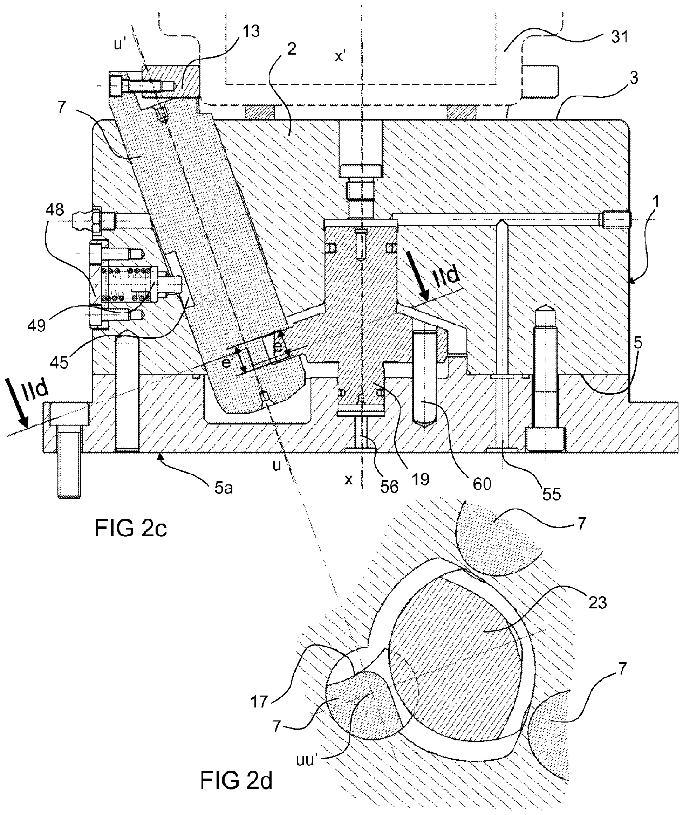

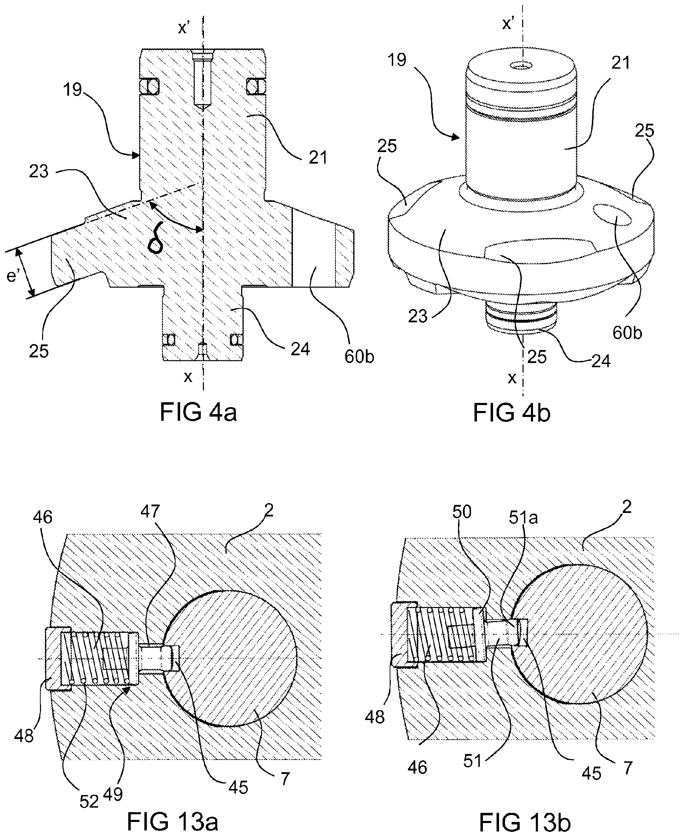

Le déplacement des coulisseaux 7 est commandé par un piston de révolution 19 d'axe xx' qui comporte successivement de haut en bas sur les figures 4a et 4b, une tête cylindrique 21, un plateau 23 et un bossage cylindrique 24. La face arrière 5 du corps de mandrin est creusée d'une cavité axiale 27 destinée à recevoir le piston 19 et son plateau 23, et comporte un alésage axial 27a dans lequel la tête 21 vient se monter à coulissement, et le bossage 24 est monté à coulissement quant à lui dans un alésage correspondant 27b réalisé dans la plaque de fond 5a, ainsi que représenté sur les figures 2a et 2c.

L'embrèvement 17 est constitué d'une zone en creux, ou concave, du coulisseau 7, notamment réalisée par usinage, cette zone étant symétrique par rapport à un plan axial du coulisseau 7 et s'étendant de l'extrémité du pied de celui-ci jusqu'à déboucher dans la rainure semi-circulaire 15.

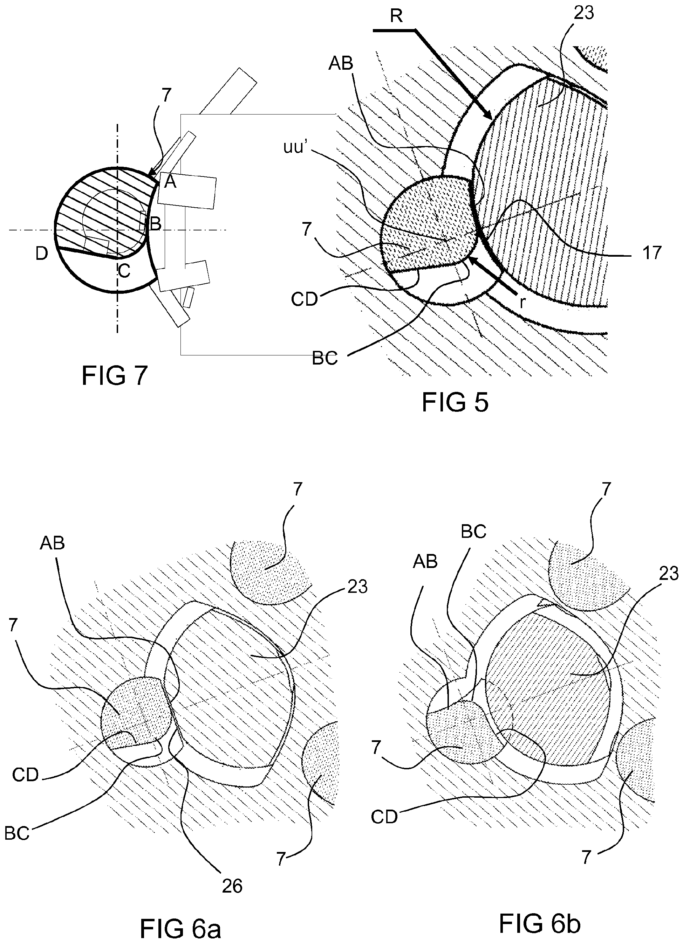

La forme et la profondeur de cet embrèvement 17 sont telles que, ainsi que représenté sur les figures 2a, 2b, et 5, le fond de celui-ci soit d'une forme complémentaire de celle du plateau 23 de façon qu'il vienne le tangenter en tout point, c'est-à-dire qu'il vienne au plus proche de celui-ci lorsque le piston 19 se trouve en position haute, ou position de mise en place du coulisseau, ainsi que représenté sur la figure 2a.

Dans le présent mode de mise en oeuvre de l'invention, la forme de la section droite du plateau 23 étant circulaire de rayon R, l'embrèvement 17 est en conséquence également de section droite circulaire et d'un rayon voisin de celui- ci.

Ainsi que précisé précédemment et représenté sur les figures, la partie supérieure de l'embrèvement 17 débouche dans la rainure 15. Dans le présent mode de mise en œuvre et ainsi que représenté sur la figure 7, le fond de la rainure 15 se compose ainsi de trois parties, à savoir une partie AB concave et circulaire de rayon voisin de celui du plateau 23 et complémentaire de celle-ci et qui correspond à l'embrèvement 17, une partie arrondie en quart de cercle BC dont le rayon r est égal à la distance séparant l'axe longitudinal uu' du coulisseau 7 du plateau 23, et une partie CD rectiligne telle qu'elle soit proche du plateau 23 lorsque le coulisseau a été verrouillé sur le plateau après avoir subi une rotation d'un quart de tour autour de son axe longitudinal uu' ainsi qu'expliqué ci-après et représenté sur la figure 2d.

Dans des variantes non conformes à l'invention, la périphérie de la zone d'entraînement 25 du plateau 23 pourrait, en fonction des besoins, avoir une forme autre que circulaire et pourrait, par exemple, avoir une section droite de forme hexagonale ou, ainsi que représenté sur la figure 6a, comporter, face au coulisseau, un méplat 26, si bien que, dans ces conditions, la forme du fond de l'embrèvement 17 serait alors rectiligne, puisque de forme complémentaire de ce méplat.

Dans une autre variante de mise en œuvre de l'invention, la partie CD du fond de la rainure 15 peut ne pas être rectiligne de façon, qu'après la rotation du coulisseau 7 qui met en prise celui-ci avec la zone d'entraînement 25 du plateau, la partie CD soit de forme complémentaire de celle de la périphérie de la zone d'entraînement 25 du plateau, ainsi que représenté sur la figure 6b. Sur cette dernière, la partie CD du fond de la rainure 15 sera ainsi de forme circulaire ainsi que le plateau.

Le montage du piston 19 dans le corps de mandrin 2 s'effectue à partir de la face arrière 5 de celui-ci, et cette dernière est fermée après montage par la plaque de fond 5a. La cavité 27 est d'une hauteur telle qu'elle permet un déplacement axial du piston 19 qui est guidé dans ce déplacement par les alésages 27a et 27b.

Le montage par l'arrière du piston 19 à l'intérieur du corps de mandrin 2 est particulièrement intéressant en ce qu'il évite d'affaiblir la face avant 3 de celui-ci.

De façon à permettre au piston 19 d'assurer l'entraînement des coulisseaux 7 dans leurs logements respectifs 9, le plateau 23 comporte une zone d'entraînement 25 associée à chaque coulisseau, dont deux bords sont parallèles et inclinés par rapport à l'axe xx' d'un angle δ dont la valeur est complémentaire de celle de l'angle β, c'est-à-dire d'une valeur dans le présent exemple de l'ordre de 70°, de façon que, ainsi qu'expliqué ci-après, les zones d'entraînement 25 soient parallèles aux bords latéraux des rainures 15 des coulisseaux 7, de façon qu'elles puissent venir se monter à coulissement dans ces dernières lorsque le piston et les coulisseaux sont en place dans le corps de mandrin 2.

A cet effet, l'épaisseur e' de chacune des trois zones d'entraînement 25 est légèrement inférieure à la largeur e des rainures 15, de façon que chacune des zones d'entraînement 25 puisse s'ajuster dans ces dernières ainsi qu'expliqué ci-après.

La présente invention permet de mettre en place les coulisseaux 7 après que le piston 19 ait été monté dans la cavité 27.

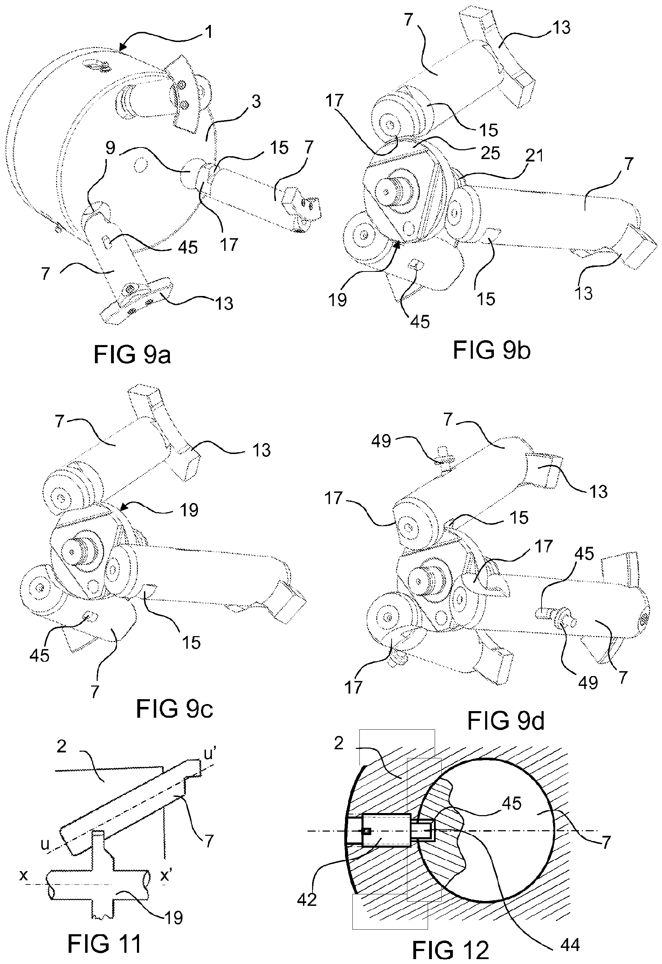

On a représenté sur les figures 9a à 9d les phases essentielles de mise en place des coulisseaux 7 dans le corps de mandrin 2.

Ainsi que représenté sur la figure 9a, on présente tout d'abord chaque coulisseau 7 devant l'entrée 9a de son logement 9. Pour une meilleure clarté des explications, on a représenté les coulisseaux 7 et le piston de commande 19 dans la position qu'ils occupent à l'intérieur du corps de mandrin, mais en supprimant tous les autres éléments de ce dernier.

Dans une première phase de mise en place, on descend ensuite chaque coulisseau 7 dans son logement 9, ainsi que représenté sur la figure 9b, jusqu'à ce que sa rainure 15 se trouve au niveau d'une zone d'entraînement 25 du plateau 23. Pour ce faire, on a précédemment mis le piston 19 en position haute et on l'a orienté autour de son axe xx' de façon à le mettre dans une position de référence à l'aide de moyens d'indexation qui seront décrits ci-après. On oriente ensuite chaque coulisseau 7 de façon telle que son embrèvement 17 soit tourné vers le centre du mandrin, et plus précisément vers la zone d'entraînement 25 avec laquelle on souhaite le mettre en prise. L'embrèvement 17 qui est conçu de telle façon qu'il tangente la périphérie du de la zone d'entraînement 25 du plateau 23 lorsque le piston 19 est en position haute ainsi que précisé précédemment, permet de descendre le coulisseau 7 jusqu'à ce que son encoche 15 se trouve au niveau de la zone d'entraînement 25, ainsi que représenté sur la figure 9c.

Dans une seconde phase, on fait effectuer à chaque coulisseau 7 une rotation d'un quart de tour, autour de son axe longitudinal uu' de façon que son encoche 15 vienne recevoir la zone d'entraînement 25, ce qui assure la liaison, ou mise en prise, en translation des coulisseaux avec le piston, ainsi que représenté sur la figure 9d.

Bien entendu, afin de faciliter la mise en place, on peut, suivant l'invention, prévoir des moyens permettant de bloquer la course de coulissement des coulisseaux 7 à l'intérieur de leurs logements 9 respectifs lorsque, lors de la mise en place, les encoches 15 se trouvent face aux zones d'entraînement 25, ainsi que représenté sur la figure 9c.

La présente invention est particulièrement intéressante en ce qu'elle permet de constituer une mise en prise, ou verrouillage, des coulisseaux sur le piston de commande qui, d'une part, est d'une réalisation mécanique beaucoup plus simple que celle des moyens de verrouillage à baïonnette de l'état antérieur de la technique. De seconde part, ces moyens de verrouillage nécessitent pour leur mise en place dans le corps de mandrin un volume bien moins important que celui nécessité par les moyens de verrouillage connus, notamment les moyens de verrouillage précités à baïonnette. On peut ainsi réaliser des mandrins de plus faible diamètre, ce qui est particulièrement intéressant notamment lorsque ces mandrins sont à serrage par l'extérieur dans lesquels les coulisseaux convergent vers le fond des mandrins, si bien que le volume disponible pour implanter les moyens de verrouillage est alors des plus réduit.

La présente invention est également intéressante en ce que les moyens de mise en prise, ou verrouillage, du piston de commande avec les coulisseaux ne créent aucune zone de moindre résistance, contrairement aux dispositifs de l'état antérieur de la technique dans lesquels la transmission des efforts entre le piston de commande et les coulisseaux se fait par exemple par un téton ou nécessite la réalisation d'une découpe dans le plateau du piston de commande.

Enfin, la présente invention permet de réaliser un serrage des pièces à maintenir autorisant la mise en œuvre de moyens de palonnage.

En effet, on constate que la présente invention permet à chacun des coulisseaux 7, une fois sa mise en place effectuée, d'être libre en rotation autour de son axe longitudinal uu' et ceci en raison du fait que ledit axe uu' est perpendiculaire à la zone d'entraînement 25.

On a représenté de façon schématique sur les figures 10a et 10b des mors 13 fixés en extrémité de coulisseaux 7 respectifs. Sur ces figures, les mors 13 réalisent le serrage d'une pièce métallique 31 dont le profil n'est pas rigoureusement circulaire et l'on sait que, dans une telle configuration, les deux extrémités d'appui 13a des mors 13 ne viennent pas en contact avec la pièce 31, si bien que d'une part le maintien de celle-ci n'est pas optimal et que, de seconde part, le serrage s'effectue de façon plus ou moins aléatoire, ce qui nuit à la condition de répétitivité nécessaire à un usinage de précision.

On rappellera que dans les mandrins à coulisseaux inclinés de l'état antérieur de la technique dans lesquels la zone d'entraînement n'est pas perpendiculaire à l'axe longitudinal des coulisseaux, ainsi que représenté de façon schématique sur la figure 11, les coulisseaux ne peuvent tourner autour de leur axe longitudinal uu' ce qui, de ce fait, empêche tout palonnage des mors avec pour conséquences les inconvénients précédemment décrits.

Lorsque, ainsi que le permet la présente invention, les coulisseaux 7 peuvent tourner autour de leur axe longitudinal uu' on sait qu'alors chaque extrémité d'appui 13a des mors vient en appui sur la pièce 31, ainsi que représenté sur la figure 10b, ce qui évite ces inconvénients.

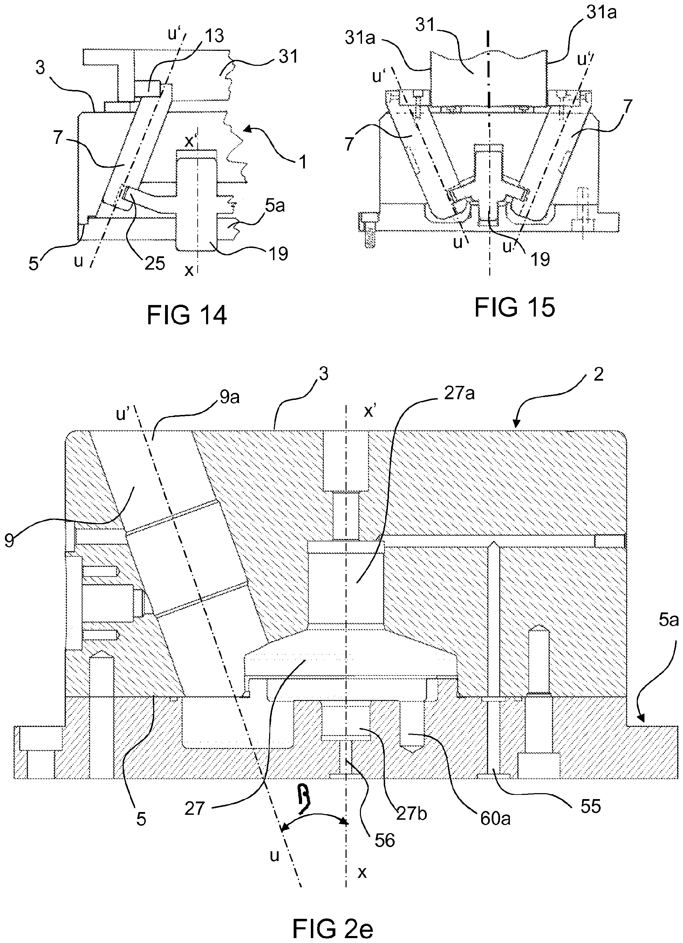

Bien entendu, on peut mettre en œuvre suivant l'invention des moyens en mesure de limiter l'amplitude de la rotation des coulisseaux 7 lors du palonnage. Dans un premier exemple, représenté sur la figure 12, ces moyens sont constitués d'une vis 42 qui traverse radialement le corps de mandrin 2 et dont une extrémité forme un téton 44 de plus faible diamètre et qui pénètre dans une gorge longitudinale 45 du coulisseau 7 dont la largeur est supérieure au diamètre de ce dernier. On comprend que, dans ces conditions, la différence de dimensions entre le diamètre du téton 44 et la largeur de la gorge 45 permet de contrôler l'amplitude de la rotation du coulisseau lors du palonnage et donc celle du mors 13 qui lui est associé.

On peut également, mettre en oeuvre des moyens en mesure non seulement de limiter l'amplitude de la rotation des coulisseaux mais également de solliciter élastiquement ces derniers vers une position de stabilité.

On a ainsi représenté de tels moyens à échelle agrandie sur les figures 13a et 13b. Ainsi que dans l'exemple précédent, on a creusé à partir de la surface de chacun des coulisseaux 7 une gorge longitudinale 45 et à travers le corps 2 du mandrin un trou radial 46 qui se prolonge par un trou 47 de plus faible diamètre, légèrement supérieur à la largeur de la gorge 45 qui débouche dans le logement 9 du coulisseau au niveau de la gorge 45 de celui-ci lorsqu'il est en place, ainsi que représenté sur la figure 13a. Le trou 46 est obturé du côté de l'extérieur du corps du mandrin par un bouchon 48. Le trou 46 reçoit un élément de rappel 49 qui comprend une embase 50 qui s'étend du côté du coulisseau par un bossage 51 qui se termine par une tête sensiblement sphérique 51a qui pénètre dans la gorge 45. Un ressort de compression 52 est logé dans le trou 46 et applique l'embase 50 contre le fond de celui-ci. Le diamètre du trou 47 est supérieur à celui du bossage 51, si bien que, lorsque le coulisseau 7 est sollicité en rotation autour de son axe uu', ce qui se produit lorsque, ainsi que représenté sur la figure 10b, la pièce à serrer 31 est légèrement irrégulière, la tête sphérique 51a peut se déplacer et l'élément de rappel 49 effectue alors une légère rotation à encontre de l'action qu'exerce le ressort de rappel 52 sur son embase 50. Ainsi, les mors 13 qui sont solidaires des coulisseaux 7 peuvent donc effectuer un palonnage et, de plus, ils sont sollicités vers une position de rappel.

Le piston 19 est pourvu de moyens d'indexation qui permettent de le positionner à l'intérieur du corps de mandrin 2, de façon que les zones d'entraînement 25 se positionnent automatiquement en face des logements 9. Dans le présent mode de mise en oeuvre, ces moyens sont constitués d'une broche de centrage 60 qui vient se loger dans un trou 60a de la plaque de fond 5a et dans un trou 60b du plateau 23 du piston 19.

Dans le présent exemple de réalisation de l'invention, le déplacement du piston de commande 19 des coulisseaux 7 est assuré par un flux hydraulique sous pression, mais il pourrait bien entendu être assuré par tout autre moyen et notamment par des moyens pneumatiques ou mécaniques.

Dans le présent mode de mise en œuvre, le corps 2 du mandrin est creusé à cet effet d'un canal d'alimentation 55 qui part de la face arrière 5 de la plaque de fond 5a du mandrin et aboutit au niveau de la partie supérieure de la tête 21 du piston 19. Lorsque le flux hydraulique sous pression est admis dans ce canal 55, il pousse le piston 19 qui entraîne les coulisseaux 7 vers l'arrière du mandrin, ce qui assure le serrage de la pièce 31 et le maintien de celle-ci tant que le fluide sous pression est maintenu dans le canal 55. Le desserrage du mandrin est obtenu par une action inverse du fluide hydraulique sous pression, via un canal 56 qui part de la face arrière de la plaque de fond 5a et qui débouche sous la base du bossage 24 du piston 19.

La présente invention est ainsi particulièrement intéressante en ce qu'elle permet de réaliser, de façon particulièrement simple, la mise en prise du piston de commande avec les coulisseaux, et ceci par des moyens en mesure de transmettre des efforts importants, ces moyens occupant de plus un faible volume, ce qui permet de réaliser des mandrins de plus faible diamètre que ceux suivant la technique antérieure, notamment dans le cas de mandrins à serrage par l'extérieur.

La présente invention permet également d'assurer un palonnage des mors ce qui, dans le cas de certains mandrins à coulisseaux inclinés de l'état antérieur de la technique n'était pas envisageable.

Bien entendu, et bien que les exemples précédemment décrits mettent en œuvre des coulisseaux inclinés de l'extérieur du mandrin vers l'intérieur de celui-ci lorsque l'on va de sa face avant 3 vers sa face arrière 5, on pourrait également suivant l'invention, et ainsi que représenté sur la figure schématique 14, mettre en œuvre des mandrins qui, à l'inverse, comportent des coulisseaux 7 inclinés de l'intérieur du mandrin vers l'extérieur lorsque l'on va de leur face avant 3 vers leur face arrière 5. De tels mandrins sont particulièrement intéressants lorsque l'on doit assurer le serrage de pièces 31 à partir de l'intérieur de celles-ci.

Enfin, la présente invention est parfaitement applicable à des mandrins comportant un nombre quelconque de coulisseaux.

Ainsi que représenté sur la figure 15, le mandrin à mors incliné suivant l'invention peut comporter par exemple deux coulisseaux 7. Une telle application est particulièrement intéressante dans le cas où l'on doit assurer le maintien de pièces 31 comportant deux faces parallèles 31a. Un tel mandrin présente par ailleurs l'avantage de positionner de façon rigoureusement précise le plan central P de la pièce par rapport à ses faces latérales parallèles 31a.

## Revendications

1. Mandrin de serrage comportant un corps (2) recevant au moins un coulisseau (7) monté à coulissement dans un logement (9) du corps (2), ce logement (9) étant incliné par rapport à l'axe (XX') du mandrin et débouchant dans la face frontale (3) de ce dernier, le déplacement du coulisseau (7) étant commandé par le déplacement d'un piston (19) suivant l'axe (XX') du mandrin, et ce coulisseau (7) étant pourvu à l'une de ses extrémités d'une rainure (15) dans laquelle s'engage à coulissement une zone d'entraînement (25) du piston (19), cette dernière et ladite rainure (15) étant perpendiculaires à l'axe (uu') dudit coulisseau (7), où : la seconde extrémité du coulisseau (7) comporte un embrèvement (17) débouchant dans la rainure (15) qui est tel que, lors de la mise en place du coulisseau (7) à partir de la face frontale (3) du mandrin, il permette le passage de ce coulisseau (7) au niveau de la zone d'entraînement (25) et vienne tangenter cette dernière et permette le positionnement de sa rainure (15) face à ladite zone d'entraînement (25), de façon qu'après une rotation du coulisseau (7) autour de son axe (uu'), la rainure (15) vienne en prise avec la zone d'entraînement (25), le piston (19) comportant un plateau (23) en périphérie duquel est réalisée la zone d'entraînement (25) et le fond de l'embrèvement (17) possédant une section droite de forme complémentaire de celle de la périphérie de la zone d'entraînement (25), caractérisé en ce'que le plateau (23) est de révolution autour de son axe (XX') et le fond de l'embrèvement (17) est de forme circulaire et d'un rayon voisin du rayon (R) du plateau (23).

2. Mandrin de serrage suivant la revendication 1, **caractérisé en ce que** l'embrèvement (17) est constitué d'un creux qui s'étend de la seconde extrémité du coulisseau (7) jusqu'à déboucher dans la rainure (15).

3. Mandrin de serrage suivant l'une quelconque des revendications précédentes, **caractérisé en ce que** le fond de la rainure (15) comporte trois zones, à savoir une zone (AB) dont le profil est complémentaire de celui de la périphérie de la zone d'entraînement (25) du plateau (23), une zone (BC) en arc de cercle dont le rayon (r) est égal à la distance séparant son axe (uu') de la périphérie de la zone d'entraînement (25) du plateau (23), et une troisième zone (CD).

4. Mandrin de serrage suivant la revendication 3, **caractérisé en ce que** la troisième zone (CD) est rectiligne telle que, après la susdite rotation du coulisseau (7), elle soit voisine de la périphérie de la zone d'entraînement (25) du plateau (23).

5. Mandrin de serrage suivant la revendication 3, **caractérisé en ce que** la troisième zone (CD) est telle que, après la susdite rotation du coulisseau (7), elle ait une forme complémentaire de celle de la périphérie de la zone d'entraînement (25) du plateau (23).

6. Mandrin de serrage suivant l'une quelconque des revendications précédentes, **caractérisé en ce qu'**il comprend des moyens de contrôle de l'amplitude de palonnage d'un mors (13) solidaire du coulisseau (7).

7. Mandrin de serrage suivant la revendication 6, **caractérisé en ce que** les moyens de contrôle de l'amplitude de palonnage comprennent une gorge longitudinale (45) réalisée sur le coulisseau (7) dans laquelle vient prendre place un téton (44) lié au corps (2) dudit mandrin dont le diamètre est inférieur à la largeur de la gorge longitudinale (45).

8. Mandrin de serrage suivant l'une des revendications précédentes, **caractérisé en ce qu'**il comprend des moyens de sollicitation en rotation du coulisseau (7) autour de son axe longitudinal (uu') pour le ramener vers une position d'équilibre.

9. Mandrin de serrage suivant la revendication 8, **caractérisé en ce que** les moyens de sollicitation en rotation du coulisseau (7) comprennent un élément de rappel (49) disposé dans un logement (46) du corps (2) de mandrin qui comprend une embase (50) sollicitée vers le fond de ce logement par des moyens élastiques (52), l'embase (50) se prolongeant par une tête (51a) venant se loger dans la gorge (45).

10. Mandrin de serrage suivant l'une des revendications précédentes, **caractérisé en ce que** le piston (19) est pourvu de moyens d'indexation (60) aptes à le positionner par rapport au logement (9) du coulisseau (7), de façon telle que la zone d'entraînement (25) se trouve disposée face à celui-ci.

## Patentansprüche

1. Einspanndorn, umfassend einen Körper (2), der wenigstens einen Schlitten (7) aufnimmt, der gleitend in eine Aufnahme (9) des Körpers (2) montiert ist, wobei diese Aufnahme (9) in Bezug auf die Achse (XX') des Dorns geneigt ist und in die Vorderseite (3) desselben mündet, wobei die Verschiebung des Schlittens (7) durch die Verschiebung eines Kolbens (19) gemäß der Achse (XX') des Dorns gesteuert ist, und dieser Schlitten (7) an einem seiner Enden mit einer Rille (15) versehen ist, in der gleitend ein Antriebsbereich (25) des Kolbens (19) zum Eingreifen kommt, wobei letzterer und die genannte Rille (15) lotrecht zur Achse (uu') des genannten Schlittens (7) sind, wo das zweite Ende des Schlittens (7) eine Verzapfung (17) umfasst, die in die Rille (15) mündet, die derart ist, dass beim Einsetzen des Schlittens (7) ab der Vorderseite (3) des Dorns er das Hindurchtreten dieses Schlittens (7) auf der Höhe des Antriebsbereichs (25) erlaubt und letzteren anliegend berührt und das Positionieren seiner Rille (15) gegenüber dem genannten Antriebsbereich (25) derart erlaubt, dass nach einer Rotation des Schlittens (7) um seine Achse (uu') die Rille (15) mit dem Antriebsbereich (25) zum Eingreifen kommt, wobei der Kolben (19) einen Boden (23) an der Peripherie umfasst, von dem der Antriebsbereich (25) realisiert ist, und wobei der Verzapfungsboden (17) einen geraden Querschnitt in einer zu dem der Peripherie des Antriebsbereichs (25) komplementären Form besitzt,
**dadurch gekennzeichnet, dass** der Boden (23) um seine Achse (XX') in Umdrehung um seine Achse (XX') ist und der Verzapfungsboden (17) eine Kreisform aufweist und einen Radius ähnlich dem Radius (R) des Bodens (23) aufweist.

2. Einspanndorn gemäß Anspruch 1, **dadurch gekennzeichnet, dass** die Verzapfung (17) aus einem Hohlraum gebildet ist, der sich vom zweiten Ende des Schlittens (7) erstreckt, bis er in die Rille (15) einmündet.

3. Einspanndorn gemäß irgendeinem der voranstehenden Ansprüche, **dadurch gekennzeichnet, dass** der Boden der Rille (15) drei Bereiche umfasst, und zwar einen Bereich (AB), dessen Profil komplementär zu dem der Peripherie des Antriebsbereichs (25) des Bodens (23) ist, einen Bereich (BC) in Kreisbogenform, dessen Radius (r) gleich der Entfernung ist, die seine Achse (uu') von der Peripherie des Antriebsbereichs (25) des Bodens (23) trennt, und einen dritten Bereich (CD).

4. Einspanndorn gemäß Anspruch 3, **dadurch gekennzeichnet, dass** der dritte Bereich (CD) derart geradlinig ist, dass er nach der oben genannten Rotation des Schlittens (7) der Peripherie des Antriebsbereichs (25) des Bodens (23) benachbart ist.

5. Einspanndorn gemäß Anspruch 3, **dadurch gekennzeichnet, dass** der dritte Bereich (CD) derart ist, dass er nach der oben genannten Rotation des Schlittens (7) eine Form aufweist, die zu der der Peripherie des Antriebsbereichs (25) des Bodens komplementär ist.

6. Einspanndorn gemäß irgendeinem der voranstehenden Ansprüche, **dadurch gekennzeichnet, dass** er Kontrollmittel der Schwenkamplitude einer fest mit dem Schlitten (7) verbundenen Spannbacke (13) umfasst.

7. Einspanndorn gemäß Anspruch 6, **dadurch gekennzeichnet, dass** die Kontrollmittel der Schwenkamplitude eine längliche Auskehlung (45) umfassen, die auf dem Schlitten (7) realisiert ist, in der ein Zapfen (44) angeordnet ist, der mit dem Körper (2) des genannten Dorns verbunden ist, dessen Durchmesser kleiner ist als die Breite der länglichen Auskehlung (45).

8. Einspanndorn gemäß einem der voranstehenden Ansprüche, **dadurch gekennzeichnet, dass** er Mittel zum Ansprechen in Rotation des Schlittens (7) um seine Längsachse (uu') umfasst, um ihn in einer Gleichgewichtsposition zurückzubringen.

9. Einspanndorn gemäß Anspruch 8, **dadurch gekennzeichnet, dass** die Mittel zum Ansprechen in Rotation des Schlittens (7) ein Rückholelement (49) umfassen, das in einer Aufnahme (46) des Körpers (2) des Dorns angeordnet ist, der einen Sockel (50) umfasst, der zum Boden dieser Aufnahme durch elastische Mittel (52) angesprochen ist, wobei sich der Sockel (50) durch einen Kopf (51a) verlängert, der in der Auskehlung (45) aufgenommen ist.

10. Einspanndorn gemäß einem der voranstehenden Ansprüche, **dadurch gekennzeichnet, dass** der Kolben (19) mit Indexierungsmitteln (60) versehen ist, die geeignet sind, ihn in Bezug auf die Aufnahme (9) des Schlittens (7) derart anzuordnen, dass der Antriebsbereich (25) gegenüber demselben angeordnet ist.

## Claims

1. A clamping chuck including a body (2) receiving at least one slide (7) slidably mounted in a housing (9) of the body (2), this housing (9) being tilted relative to the axis (XX') of the chuck and opening into the front face (3) of the latter, the movement of the slide (7) being controlled by the movement of a piston (19) along the axis (XX') of the chuck, and this slide (7) being provided at one of its ends with a groove (15) in which a driving zone (25) of the piston (19) is slidably inserted, the latter and said groove (15) being perpendicular to the axis (uu') of said slide (7), where: the second end of the slide (7) includes a tongue-and-groove joint (17) opening into the groove (15) which is such that, upon placing the slide (7) from the front face (3) of the chuck, it enables this slide (7) to pass at the driving zone (25) and brushes against the latter and enables the positioning of its groove (15) in front of said driving zone (25), so that after a rotation of the slide (7) about its axis (uu'), the groove (15) engages with the driving zone (25), the piston (19) including a plate (23) at the periphery of which the driving zone (25) is made and the bottom of the tongue-and-groove joint (17) having a cross-section with a shape complementary to the that of the periphery of the driving zone (25),
**characterised in that** plate revolves about its axis (XX') and the bottom of the tongue-end-groove joint (17) is of a circular shape and a radius close to the radius (R) of the plate (23).

2. The clamping chuck according to claim 1, **characterised in that** the tongue-and-groove joint (17) consists of a hollow which extends from the second end of the slide (7) until it opens into the groove (15).

3. The clamping chuck according to any of the preceding claims, **characterised in that** the bottom of the groove (15) includes three zones, namely a zone (AB) the profile of which is complementary to that of the periphery of the driving zone (25) of the plate (23), a zone (BC) as an arc of circle the radius (r) of which is equal to the distance separating its axis (uu') from the periphery of the driving zone (25) of the plate (23), and a third zone (CD).

4. The clamping chuck according to claim 3, **characterised in that** the third zone (CD) is rectilinear such that, after said rotation of the slide (7), it is close to the periphery of the driving zone (25) of the plate (23).

5. The clamping chuck according to claim 3, **characterised in that** the third zone (CD) is such that, after said rotation of the slide (7), it has a shape complementary to that of the periphery of the driving zone (25) of the plate (23).

6. The clamping chuck according to any of the preceding claims, **characterised in that** it comprises means for controlling the matching amplitude of a jaw (13) integral with the slide (7).

7. The clamping chuck according to claim 6, **characterised in that** the matching amplitude control means comprise a longitudinal throat (45) made on the slide (7) in which a teat (44) connected to the body (2) of said chuck the diameter of which is lower than the width of the longitudinal slot (45) is placed.

8. The clamping chuck according to one of the preceding claims, **characterised in that** it comprises means for rotatably biasing the slide (7) about its longitudinal axis (uu') to bring it back to a balance position.

9. The clamping chuck according to claim 8, **characterised in that** the means rotatably biasing the slide (7) comprise a return element (49) disposed in a housing (46) of the chuck body (2) which comprises a base (50) biased to the bottom of this housing by elastic means (52), the base (50) extending to a head (51a) being housed in the throat (45).

10. The clamping chuck according to one of the preceding claims, **characterised in that** the piston (19) is provided with indexing means (60) capable of positioning it relative to the housing (9) of the slide (7), so that the driving zone (25) is disposed in front of the same.
